# EUROPEAN PATENT APPLICATION

(11) **EP 0 777 219 A1**
(43) Date of publication of application: **04.06.1997**
(21) Application number: 96119178.0
(22) Date of filing: 29.11.1996
(51) Int. Cl.: G11B 7/12, G11B 7/135

(54) **Optical head apparatus**

(30) Priority: 30.11.1995 JP 312383/95
(71) Applicant: NEC CORPORATION, Tokyo (JP)
(72) Inventor: Ohba, Akimoto, Minato-ku, Tokyo (JP)
(74) Representative: VOSSIUS & PARTNER

(57) **Abstract**

When a compatible optical head apparatus for different kinds of optical memory media, such as a CD-ROM and a DVD, is constructed, a mechanism for interchanging an objective lens with that for optical memory of other kind is necessary, and then, the structure of the apparatus becomes complicated, and deterioration of reliability caused by vibrations of movable elements. The first optical beam splitter 6 branches the collimated optical beam into two parts, which are respectively led to the objective lenses 4A and 4B. The second optical beam splitter 7 branches the optical beam reflected from an optical disc 1 and leads it to the photo-detector 12. Accordingly, the objective lenses 4A and 4B can record and reproduce optical information independently of each other, mechanically movable elements become unnecessary, and thereby the structure can be simplified and vibrations caused by movable element can be prevented.

## Description

The invention relates to an optical head apparatus used for recording, or reproducing-only optical information, and especially to an optical head apparatus, which is compatible for optical discs of different kinds or standards.

Recently, a compact disc (CD, hereinafter) for reproducing music, and a reproducing-only optical disc serving as a CD-ROM for data-filing are widely spread, and thicknesses of these discs are standardized to be 1.2 mm. At present, a digital video disc (DVD, hereinafter) with higher information capacity has begun to be proposed as a disc for reproducing a moving picture with long play time, such as a cinematograph. In the DVD disc, information with higher density is recorded on a disc with the same dimensions as those of the CD and the CD-ROM, and higher density of the information on the disc surface can be obtained by decreasing dimension of pits on the optical disc. In the optical head apparatus for reproducing information on the disc, the smaller pits become readable by decreasing the wavelength of the optical beam and increasing the numerical aperture (NA, hereinafter) of an objective lens as compared with those used in the conventional CD or CD-ROM. Namely, in the conventional CD or CD-ROM, a semiconductor laser with a lasing wavelength of 785 nm and the objective lens with the NA of 0.45 have been used, but in the optical head apparatus for the DVD, the wavelength of the optical beam is 635 to 650 nm and the objective lens with the NA of 0.6 is used.

Now then, in the optical head apparatus of this kind, aberration caused by the tilt of the optical axis of an incident optical beam relative to the normal of the optical disc becomes extremely large, as the NA of the objective lens is increased, and the spot-size of the optical beam on the surface of the optical disc is magnified. Moreover, the aberration depends on the thickness of a plate of the optical disc, and the thinner the thicknesses of the optical disc becomes, the smaller the deterioration of the characteristic of the optical disc is. The thickness of the plate of the DVD is set up to be 0.6 mm, and therefore the objective lens of the optical head apparatus is so designed that NA and etc. are suitable to the DVD with the thickness of 0.6 mm. However, two plates with thicknesses of 0.6 mm are stuck together practically, and a disc with a total thickness of 1.2 mm is obtained. Since the DVD is so constructed that the optical beam is reflected by a recording surface positioned at the depth of 0.6 mm, the substantial thickness of the DVD is 0.6 mm.

Since it is evident that the optical head apparatuses for the CD and the CD-ROM are identical with each other, only compatibility of the optical head apparatus for the CD-ROM with that for the DVD will be discussed hereinafter.

As mentioned in the above, if the optical beam refracted by the objective lens designed for the DVD is focused on the optical disc for the CD-ROM with the thickness of 1.2 mm for trial, in order to obtain the compatible optical head apparatus for the CD-ROM and the DVD, the beam spot cannot be focalized on the surface of the optical disc because of spherical aberration enough. Then, it is difficult to realize a memory device with compatibility by the aforementioned method.

Great efforts have been made by engineers in the field of optical memory media in order to provide a compatible optical head apparatus for the CD-ROM and the DVD, and several proposals have been offered on this subject. However, in the conventionally proposed compatible optical head apparatuses for the CD-ROM and the DVD, plural objective lenses are mounted on a lens holder and one of the objective lenses is selected by mechanical means in accordance with the kind of the optical disc. Then, strict accuracies are required in a manufacturing process, and it is very difficult to perfectly satisfy these requirements. Accordingly, inaccuracies of structural elements cause errors in data, and mechanical vibrations of the movable elements of the structure deteriorate reliability of the optical head apparatus. Moreover, since a mechanism for interchanging the objective lenses in accordance the kind of the optical disc is necessary, the structure of the apparatus becomes complicated and it is unprofitable for small-sizing the optical head apparatus.

Accordingly, it is an object of the invention to provide an optical head apparatus, in which a mechanism for interchanging objective lenses in accordance with the kinds of optical discs is unnecessary, and optical information can be recorded in and reproduced from various kinds of optical discs, involving the CD-ROM and the DVD.

According to the first feature of the invention, an optical head apparatus, comprises:
an optical source for emitting a first or second optical beam to be formed into a collimated optical beam and focused on a surface of an optical disc, the optical disc being selected from optical discs of first and second kinds and the optical beam being selected from the first and second optical beams, both having different lasing wavelengths in accordance with a kind of the optical disc,
first and second objective lenses for respectively focusing the first and second optical beams on the surfaces of the optical discs of the first and second kinds,
a first optical beam splitter, which is positioned on an optical axis of the collimated optical beam and reflects the collimated optical beam to the first objective lens,
a fixed mirror, which is positioned beyond the first optical beam splitter on the optical axis and reflects the collimated optical beam to the second objective lens, and
a second optical beam splitter, which is positioned between the optical source and the first optical beam splitter on the optical axis, and reflects optical beams reflected from the surfaces of the optical discs of the first and second kinds to a photo-detector.

According to the second feature of the invention, an optical head apparatus, comprises:
first and second optical emitters for respectively emitting first and second optical beams to be respectively formed into collimated optical bemas and focused on a surface of optical discs of first and second kinds, said first and second optical beams having different lasing wavelengths,
first and second objective lenses for respectively focusing said first and second optical beams on said surface of said optical discs of first and second kinds,
a polarized optical beam splitter, which polarizes said first optical beam in a predetermined direction to provide a first polarized optical beam and transmits said first polarized optical beam therethrough, and polarizes said second optical beam in a direction perpendicular to said predetermined direction to provide a second polarized optical beam and reflects said second polarized optical beam therethrough, said first and second polarized optical beams having a common optical axis,
a further polarized optical beam splitter, which is positioned on said common optical axis and reflects said first polarized optical beam to said first objective lens,
a fixed mirror, which is positioned beyond said further polarized optical beam splitter on said common optical axis, and reflects said second polarized optical beam to said second objective lens, and
an optical beam splitter, which is positioned between said first and second polarized optical beam splitters on said common optical axis and reflects optical beams reflected from said surfaces of said optical discs of first and second kinds to a photo-detector.

The invention will be explained in more detail in conjunction with the appended drawings, wherein:
FIG. 1 is a perspective view of a portion of an example of a conventional optical head apparatus,
FIG. 2 is a perspective view of a portion of another example of a conventional optical head apparatus,
FIG. 3 shows the first preferred embodiment of the invention,
FIG. 4 is a drawing for explanation of focussing process of optical information, and
FIG. 5 shows the second preferred embodiment of the invention.

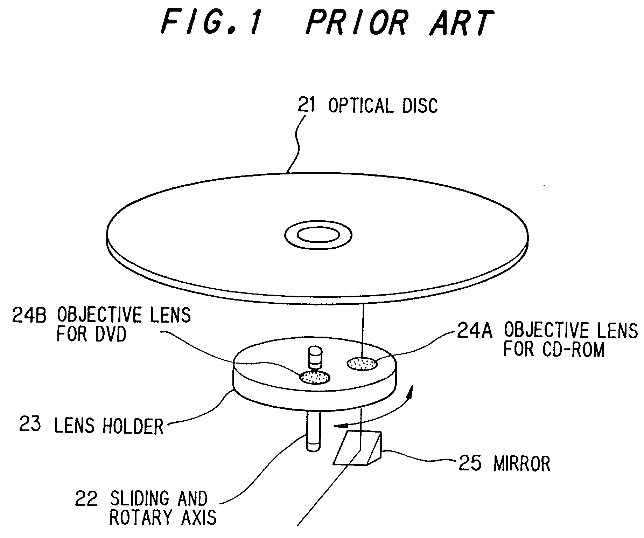

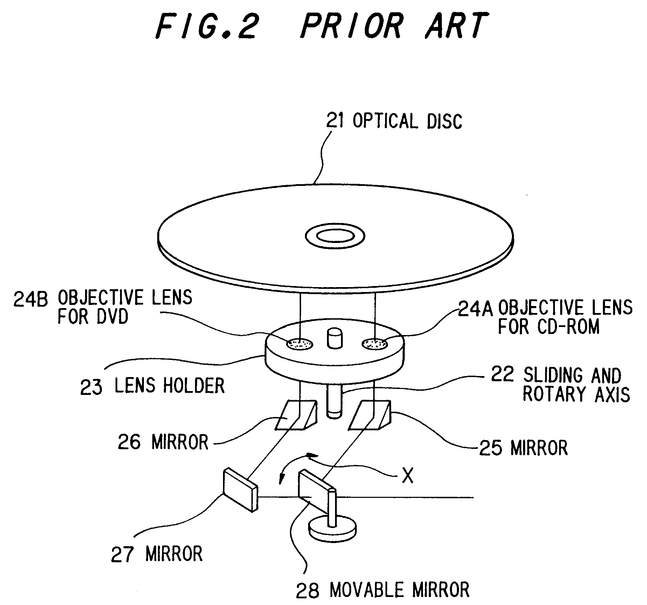

Before explaining an optical head apparatus in the preferred embodiments according to the invention, the aforementioned conventional optical heads will be explained in FIGS. 1 and 2.

Heretofore, several compatible optical head apparatuses for the CD-ROM and the DVD has been proposed. For example, a technology related to an optical head apparatus applicable to both the DVD and the CD-ROM is disclosed on Nikkei Mechanicals, pages 62 to 65, No. 460 (August, 1995). In this disclosure, two objective lenses with different NAs are respectively mounted on the same lens holder, which is driven in focusing and tracking directions by a sliding and rotary type actuator, and thereby an optical beam can be suitably focused in both cases of the DVD and the CD-ROM. Explaining concretely, as shown in FIG. 1, a lens holder 23 is supported by a sliding and rotary axis 22 perpendicular to the recording surface of the optical disc 21 in such a way that the lens holder 23 is movable in the axial and circumferential directions, and an objective lens 24A for the CD-ROM and an objective lens 24B for the DVD are mounted at the same radial distances from the sliding and rotary axis 22. Any one of the objective lenses 24A and 24B selectively faces a mirror 25 by rotating the lens holder 23 around the sliding and rotary axis 22 in accordance with the kinds of the optical discs.

In an optical head apparatus disclosed in Japanese Patent Kokai 7-37259, the objective lens 24A for the CD-ROM and the objective lens 24B for the DVD are respectively mounted on the same lens holder 23, which is supported by the sliding and rotary axis 22, and the objective lenses 24A and 24B are coupled to the optical system via the mirrors 25 to 28, as shown in FIG. 2. The mirror 28 is so constructed that it is movable in clockwise or counterclockwise direction around a rotary axis as shown by arrows X in FIG. 2. In this structure, the direction of the optical beam is changed in two steps in accordance with the attitude of the movable lens 28. When the optical beam is reflected by the movable mirror 28, the reflected beam is directed to the objective lens 24A for the CD-ROM, and when the optical beam is not reflected by the movable mirror 28, the optical beam is directed to the objective lens 24B for the DVD. Then, the compatible optical head apparatus for the CD-ROM and the DVD can be obtained by selecting one of the objective lenses 24A and 24B in accordance with the kind of the optical disc 21.

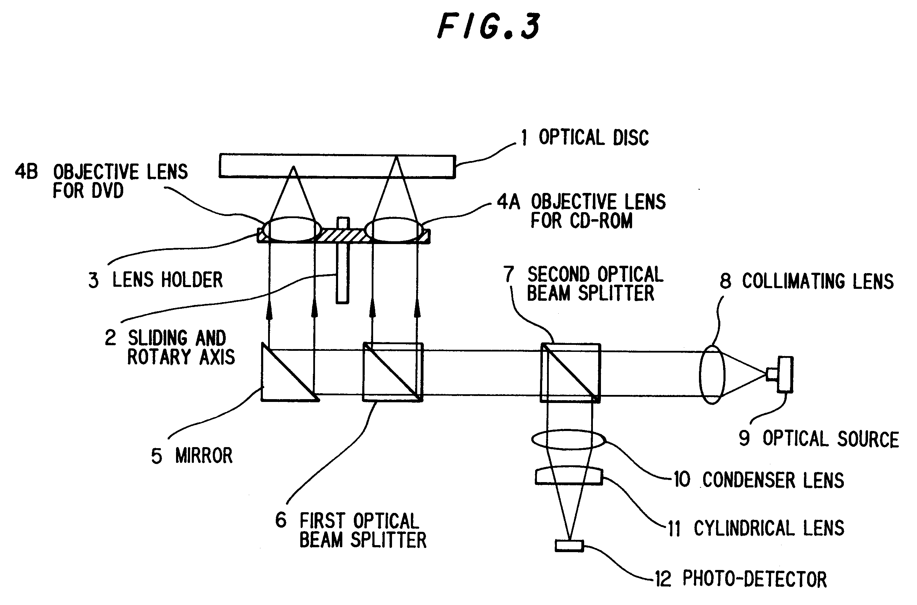

Next, preferred embodiments will be explained referring to appended drawings. FIG. 3 shows the structure of the first preferred embodiment of the invention. A sliding and rotary axis 2 is set up vertically to the recording surface of the optical disc 1, inserted into a circular hole on a lens holder 3 and supported thereby. The lens holder 3 is so driven in axial and circumferential directions that the optical disc 1 is adequately focused and tracked. The explanation on operation of the actuator for controlling the lens holder in focussing and tracking directions will be omitted, because it is quite similar to those used in the conventional apparatus. Objective lenses 4A for the CD-ROM and 4B for the DVD are respectively mounted on the lens holder 3, and the NAs of these lenses are so selected that they can respectively focus the optical beams on the recording surface of the optical disc 1 with high precision.

At a point on an optical axis behind one of the aforementioned objective lenses, the objective lens 4B for the DVD in the present case, a fixed mirror 5 composed of a prism is situated, and at a point on another optical axis behind the other one of the aforementioned objective lenses, the objective lens 4A for the CD-ROM in the present case, the first optical beam splitter 6 is situated. Moreover, the fixed mirror 5 and the first optical beam splitter 6 are situated on the same optical path, which is perpendicular to the optical axis of the objective lenses 4A and 4B, and on the extension line of the aforementioned optical path, the second beam splitter 7, a collimating lens 8 and an optical source are situated. Moreover, a condenser lens 10, a cylindrical lens 11 and a photo-detector 12 are arranged on an optical path branched by the second beam splitter 7.

In the aforementioned structure, the optical beam emitted from the optical source 9 is collimated by the collimating lens 8, transmits through the second beam splitter 7 and is branched into a transmitted beam and a reflected beam by the first optical beam splitter 6. The reflected beam is led to a low NA objective lens 4A designed for the CD-ROM with a 1.2 mm thick plate. The transmitted optical beam is reflected by the fixed mirror 5 and led to the high NA objective lens designed for the DVD with a 0.6 mm thick plate. Moreover, an optical beam focused on the optical disc surface by the objective lens 4A is reflected thereby and again reflected by the first beam splitter 6. An optical beam focused on the optical disc surface by the objective lens 4B is reflected thereby and again reflected by the fixed mirror 5. The two aforementioned optical beams, which are respectively reflected by the fixed mirror 5 and the first beam splitter 6, follow the reverse courses and are reflected by the second beam splitter 7 and received by a photo-detector 12, where astigmatism arise when they pass through a condenser lens 10 and a cylindrical lens 11.

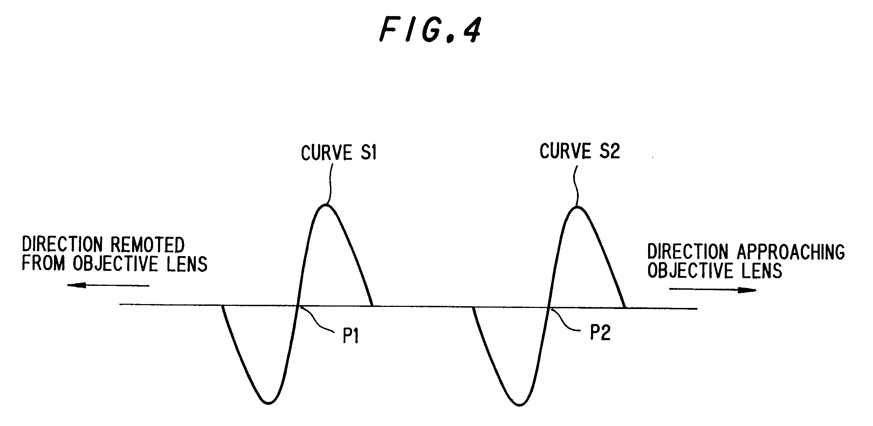

In most cases, the photo-detector 12 is composed of four square-shaped subdivided photo-detectors (not shown). When an incident optical beam is in focus, optical-powers received the four subdivided photo-detectors and equal. However, when the incident optical beam is out of focus, they are unequal because of astigmatism of an optical system. Taking note of this fact, focussing of the incident optical beam can be detected. The power of a reproduced optical signal is detected as the sum of the received optical powers of the four subdivided photo-detectors. A S-shaped curve S1 shown in the left-hand side of FIG. 4 represents a focusing error signal in case that information on the optical disc 1 for the CD-ROM is going to be reproduced, where the axis of abscissas shows displacement of the optical disc and the axis of ordinate shows the focusing error signal. When the objective lens gradually approaches the optical disc 1, the objective lens 4A for the CD-ROM focuses a beam spot on the reflecting surface of the optical disc 1 in the first place. The curve S1 shows the focusing error signal in this procedure.

In the curve S1, a zero-cross point P1 corresponds to a focalized state, in which the incident optical beam is focused on the surface of the optical disc 1 for the CD-ROM by the objective lens 4A for the CD-ROM. If a focus-servo is applied to an actuator (not shown) around the zero-cross point P1, the reproduced signal of the CD-ROM can be detected. In such a case, since the optical beam from the objective lens 4B for the DVD is out of focus on the surface of the optical disc, the optical beam from the objective lens 4B cannot reproduce the recorded information. Moreover, since the optical beam from the objective lens 4B is out of focus also on the surface of the photo-detector 12, the influence of the optical beam from the objective lens 4B on the reproduced signal of the CD-ROM is negligible.

When the objective lens further approaches the optical disc, the objective lens 4B for the DVD focuses a beam spot on the reflecting surface of the optical disc 1. A curve S2 shows a focusing error in this procedure. When the information on the DVD is reproduced, since the optical beam from the objective lens 4B for the DVD is in focus at a zero-cross point P2 on a curve S2, the reproduced signal of the DVD can be detected by applying focus-servo to the actuator around the zero-cross point P2. In this case, since the optical beam from the objective lens 4A for the CD-ROM is out focus on the surface of the optical disc 1, the influence of the returning beam on the reproduced signal of the DVD is negligible.

As mentioned in the above, in the optical head apparatus according to the first preferred embodiment of the invention, when the function of the optical head apparatus is interchanged between those for the CD-ROM and the DVD, since the optical head apparatus has no mechanism comprising movable elements to be mechanically driven, and strict accuracies are not required in manufacturing process, deterioration of reliability caused by inaccuracies or mechanical vibrations of structural elements can be prevented. Moreover, since the optical head apparatus comprises no movable elements, the structure can be simplified and is suited for small-sizing.

Furthermore, in the embodiment shown in FIG. 3, although the objective lenses 4A and 4B are respectively used for the CD-ROM and the DVD, this relation can be inverted. The astigmatism detection method using the cylindrical lens is applied for detecting the focus of the objective lens, but also a spot-size detection method, a knife edge detection method, and other various methods are applicable.

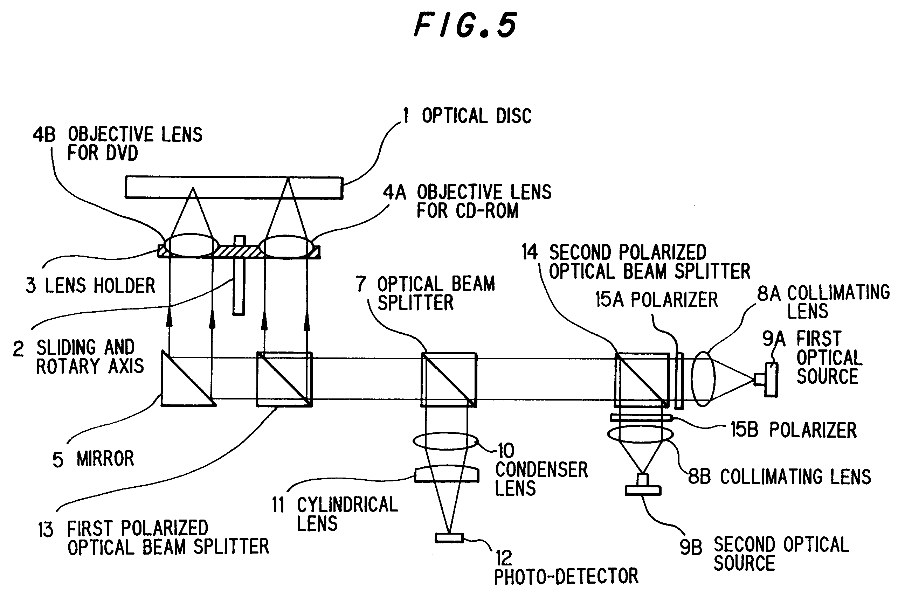

FIG. 5 shows the second preferred embodiment of the invention, and the structures and the functions of the sliding and rotary axis 2, the lens holder 3, the objective lens 4B for the DVD, the objective lens 4A for the CD-ROM and the fixed mirror 5 are the same as those shown in FIG. 3. In this drawing, the first and second optical beam splitters in FIG. 3 are respectively replaced by the first and second polarized optical beam splitters 13 and 14. On the optical axes of the first and second polarized optical beam splitter 13 and 14, the optical beam splitter 7 is situated, and the condenser lens 10, the cylindrical lens 11 and the photo-detector 12 are respectively situated on the branched optical axis of the optical beam splitter 7 similarly to those shown in FIG. 3. Moreover, a polarizer 15A, the collimating lens 8A and the first optical source 9A are situated on the optical axis of the transmitting beam of the polarized optical beam splitter 14. On the other hand, a polarizer 15B, a collimating lens 8B, and the second optical source 9B are situated on the optical axis of the reflected optical beam by the second polarized optical beam splitter 14. In the second polarized beam splitter 14, only the respective polarized components of the laser beams emitted from the optical sources are transmitted and reflected, and then aforementioned polarizers 15A and 15B are not necessarily required.

In this structure, the optical beams emitted from the first and second optical sources 9A and 9B are respectively polarized by the polarizer 15A and 15B to form two vertically polarized optical beams. For example, the optical beam emitted from the first optical source 9A is polarized by the polarizer 15A into a P-polarized beam, transmitted through the second optical splitter 14, reflected by the first polarized optical beam splitter 13 and directed to the objective lens 4A for the CD-ROM. Moreover, the reflected beam from the optical disc 1 is reflected by the first polarized optical beam splitter 13, reflected by the optical beam splitter 7 and detected by the photo-detector 12. The optical beam emitted from the second optical source 9B is polarized by the polarizer 15B into a S-polarized beam, reflected by the second polarized optical beam splitter 14, transmitted through the first polarized optical beam splitter 13, reflected by the fixed mirror 5 and directed to the objective lens 4B for the DVD. An optical beam reflected by the optical disc 1 is again reflected by the fixed mirror 5, transmitted through the first polarized optical beam splitter 13, reflected by the optical beam splitter 7 and detected by the photo-detector 12.

The methods for controlling the objective lenses 4A and 4B for focusing refracted optical beams and detecting the reproduced signals, which are carried out by the photo-detector 12, are similar to those used in the first preferred embodiment. Moreover, in this embodiment, each of the optical beams is not branched into two parts, when passing through the first polarized optical beam splitter 13, and the increases of the losses of the optical beams do not arise on both the forward and backward optical paths, and the efficiency of the utilization of the optical energy can be increased. Furthermore, since the optical sources 9A and 9B are respectively set up for the objective lenses 4A and 4B, the optical beams with different wavelengths can be supplied to the respective objective lenses. For example, the optical source of the optical beam of 780 nm can be used as the first light source 9A for the objective lens 4A.

As mentioned in the above, also in the optical head apparatus accordance to the second preferred embodiment of the invention, when the function of the optical head apparatus is interchanged between those for the CD-ROM and the DVD, since the optical head apparatus has no mechanism comprising movable elements to be mechanically driven, and strict accuracies are not required in manufacturing process, deterioration of reliability caused by inaccuracies or mechanical vibrations of structural elements can be prevented. Moreover, since the optical head apparatus comprises no movable elements, the structure can be simplified and is suited for small-sizing.

In the aforementioned embodiments, only the compatible optical head apparatus for the CD-ROM and the DVD has been explained. However, various kinds of compatible optical head apparatuses can be obtained by using objective lenses suited for other kinds of optical discs. For example, the invention is applicable to an optical phase change disc and an optical magnetic disc. Compatible optical lead apparatuses for optical discs with different thicknesses or different densities of information can be realized.

As explained in the above, in the optical head apparatus according to the invention, by arranging optical beam splitters or polarized optical beam splitters on the optical axis of the collimated beam generated by the collimating lens near the optical source, optical beams emitted from optical sources are branched by the optical beam splitters or the polarized optical beam splitters and led to each of the objective lenses, and the optical beam from each of the objective lenses is transmitted through the optical beam splitter following the backward path and detected by an photo-detector. Accordingly, optical information can be recorded in or reproduced from different optical memory media by using objective lens selected at will, without using movable elements driven mechanically, and moreover, the structure of the optical head apparatus can be simplified, and thereby deterioration of performance caused by inaccuracies in dimensions of structural elements or vibrations of movable elements can be suppressed.

Although the invention has been described with respect to specific embodiment for complete and clear disclosure, the appended claims are not to be thus limited but are to be construed as embodying all modification and alternative constructions that may be occurred to one skilled in the art which fairly fall within the basic teaching here is set forth.

## Claims

1. An optical head apparatus, comprising:
an optical source for emitting a first or second optical beam to be formed into a collimated optical beam and focused on a surface of an optical disc, said optical disc being selected from optical discs of first and second kinds,
first and second objective lenses for respectively focusing said first and second optical beams on said surfaces of said optical discs of said first and second kinds,
a first optical beam splitter, which is positioned on an optical axis of said collimated optical beam and reflects said collimated optical beam to said first objective lens,
a fixed mirror, which is positioned beyond said first optical beam splitter on said optical axis and reflects said collimated optical beam to said second objective lens, and
a second optical beam splitter, which is positioned between said optical source and said first optical beam splitter on said optical axis, and reflects optical beams reflected from said surfaces of said optical discs of said first and second kinds to a photo-detector.

2. An optical head apparatus, according to claim 1, wherein:
said photo-detector receives only an optical beam, being in focus on a surface of said optical disc, and an output of said photo-detector serves as a control signal for focusing said optical beam and a reproduced signal of information recorded on said surface of said optical disc.

3. An optical head apparatus, according to claim 1 or 2, wherein:
said objective lenses are respectively mounted on a lens holder supported by a sliding and rotary axis, and focusing of each of said objective lenses is controlled by axial movement of said sliding and rotary axis, wherein said sliding and rotary axis is perpendicular to said surface of said optical disc.

4. An apparatus, according to claim 1, 2, or 3, wherein:
one of said first and second objective lenses is that for a CD-ROM and another one is that for a DVD.

5. An optical head apparatus, comprising:
first and second optical emitters for respectively emitting first and second optical beams to be respectively formed into collimated optical bemas and focused on a surface of optical discs of first and second kinds, said first and second optical beams having different lasing wavelengths,
first and second objective lenses for respectively focusing said first and second optical beams on said surface of said optical discs of first and second kinds,
a polarized optical beam splitter, which polarizes said first optical beam in a predetermined direction to provide a first polarized optical beam and transmits said first polarized optical beam therethrough, and polarizes said second optical beam in a direction perpendicular to said predetermined direction to provide a second polarized optical beam and reflects said second polarized optical beam therethrough, said first and second polarized optical beams having a common optical axis,
a further polarized optical beam splitter, which is positioned on said common optical axis and reflects said first polarized optical beam to said first objective lens,
a fixed mirror, which is positioned beyond said further polarized optical beam splitter on said common optical axis, and reflects said second polarized optical beam to said second objective lens, and
an optical beam splitter, which is positioned between said first and second polarized optical beam splitters on said common optical axis and reflects optical beams reflected from said surfaces of said optical discs of first and second kinds to a photo-detector.

6. An optical head apparatus, according to claim 5, further comprising:
a first optical beam polarizer facing said polarized optical beam splitter at close range and polarizing said first optical beam in said predetermined direction, and
a second optical beam polarizer facing said polarized optical beam splitter at close range and polarizing said second optical bear in said direction perpendicular to said predetermined direction.

7. An optical head apparatus, according to claim 5, or 6, wherein:
said photo-detector receives only an optical beam, being in focus on a surface of said optical disc, and an output of said photo-detector serves as a control signal for focusing said optical beam and a reproduced signal of information recorded on said surface of said optical disc.

8. An apparatus, according to claim 5, 6, or 7, wherein:
said objective lenses are respectively mounted on a lens holder supported by a sliding and rotary axis, and focusing of each of said objective lenses is controlled by axial movement of said sliding and rotary axis, wherein said sliding and rotary axis is perpendicular to said surface of said optical disc.

9. An apparatus, according to any one of claims 5 to 8, wherein:
one of said first and second objective lenses is that for a CD-ROM and another one is that for a DVD.
